# EUROPEAN PATENT APPLICATION

(11) **EP 2 963 717 A1**
(43) Date of publication of application: **06.01.2016**
(21) Application number: 14175001.8
(22) Date of filing: 30.06.2014
(51) Int. Cl.: H01M 8/06

(54) **Process for increasing the steam content at the inlet of a fuel steam reformer for a solid oxide fuel cell system with anode recycle**

(71) Applicant: Haldor Topsøe A/S, 2800 Kgs. Lyngby (DK)
(72) Inventor: Bang-Møller, Christian, 2800 Kgs. Lyngby (DK); Lualdi, Matteo, 2800 Kgs. Lyngby (DK); Singh, Rahul, 2840 Holte (DK); Rostrup-Nielsen, Thomas, 2840 Holte (DK); Noes, Jesper, 2800 Kgs. Lyngby (DK)
(74) Representative: Haldor Topsøe A/S

(57) **Abstract**

A process for increasing the steam content at the inlet of a fuel steam reformer for a solid oxide fuel cell (SOFC) stack system without the need for external water addition comprises subjecting the fuel feed, preferably diesel, or the anode gas to a treatment to produce additional water and/or recover the water produced in the SOFC system, optionally doing a fuel reformer recycle by recycling part of the outlet from the fuel reformer to the inlet thereof, and recycling the water or a water-enriched stream to the fuel reformer inlet and/or to a point upstream of the fuel reformer.

## Description

The present invention relates to a process for increasing the steam content at the inlet of a fuel steam reformer for a solid oxide fuel cell (SOFC) system with anode recycle without external water addition. In this context, "fuel" means an SOFC-suitable fuel containing higher hydrocarbons, but not comprising light natural gas, alcohols and hydrogen. An obvious fuel candidate in this respect is diesel.

Solid oxide fuel cells (SOFCs) are highly efficient energy converters that can be applied as a stationary or mobile auxiliary power unit (APU) when being supplied with hydrogen. The fact that there is yet no adequate hydrogen infrastructure available drives alternative approaches to supply fuel cells. In order to facilitate the breakthrough of the technology, a promising approach is the use of hydrocarbons as a hydrogen source. In particular for mobile applications, liquid fossil fuels like diesel are suitable due to their high energy density, their easy storage and their already existing distribution infrastructure.

To generate hydrogen from SOFC-suitable fuels containing higher hydrocarbons, reforming processes like steam reforming (SR), autothermal reforming (ATR) or catalytic partial oxidation (CPO) have to be applied. In comparison to ATR and CPO, SR promises a higher hydrogen yield generating hydrogen from hydrocarbons and steam, based on catalytic reactions. However, steam reforming of especially diesel is challenging because of its complex composition of aromatic and aliphatic hydrocarbons and its sulfur content. Sulfur is a catalyst poison, blocking the active surface of the catalyst. In the same way, the catalyst is deactivated by carbon deposits, formed during the reforming process. Thus, to overcome catalyst deactivation and to achieve long-term durability for diesel steam reforming (DSR), suitable catalysts have to be found, or improved conditions for the DSR process have to be developed.

The nature of the diesel fuel and the catalyst used determine the challenges that the DSR process will face. SOFC anodes containing nickel have a high activity towards the electrochemical oxidation of hydrogen, but they are also very prone to carbon formation from higher hydrocarbons. Fuels containing higher hydrocarbons thus need to be converted into a mixture of hydrogen, water, carbon monoxide, carbon dioxide and methane in order to avoid carbon formation which can have fatal consequences for the anode of the SOFC. The most established processes for this conversion step are the SR, CPO and ATR processes, where the latter is a combination of SR and CPO. Partial oxidation (POx) occurs in the initial part of the reformer bed, thereby producing steam and heat to drive steam reforming in the downstream part.

The steam reforming is a reaction of a hydrocarbon with steam to form carbon monoxide, hydrogen and methane. It is well-known as being the principle technology to generate hydrogen using a nickel-based catalyst and a natural gas feedstock. The key feature of SR is the fact that, unlike the exothermic CPO reaction, it is a strongly endothermic reaction. A small amount of heat is released by the shift reaction which forms hydrogen and carbon dioxide from carbon monoxide and water simultaneously to the steam reforming. The reformate contains a few ppm methane at reforming temperatures above 750°C and up to 15% methane at reforming temperatures below 550°C. In fact, the methanation of CO can even make the overall steam reforming of higher hydrocarbons exothermic at low temperatures.

From the prior art a number of publications dealing with diesel steam reforming are known. Thus, US 2008/0003466 describes a method and an apparatus for steam reforming of a sulfur-containing hydrocarbon fuel, such as diesel. The apparatus includes a desulfurization unit, a pre-reformer and a steam reforming unit. A fixing material in the form of an alkaline earth oxide, a doped alkaline earth oxide or a mixture thereof is present in the steam reforming catalyst bed to fix the CO₂ that is produced at the reforming reaction. The fixing of CO₂ within the steam reforming catalyst bed creates an equilibrium shift in the SR reaction to produce more hydrogen and less carbon monoxide.

US 2012/0273728 discloses a process for steam reforming of a hydrocarbon fuel where a mixture of the fuel with water is contacted with an Al₂O₃-yttria-stabilized ZrO₂ (YSZ)-supported NiAl₂O₄ spinel catalyst under conditions wherein the mixture is at least partially steam reformed into a product gas mixture including H₂ and CO which can be used as a feed material for fuel cells.

In WO 2012/170375, a hybrid fuel cell plant including a fuel cell and a fuel reformer is described. The reformer partly or fully converts the fuel and steam into a reformed fuel stream that includes H₂, CO and CO₂. The fuel cell receives the reformed fuel stream and also an air stream including O₂ and N₂ at or above atmospheric pressure to generate a fuel cell hot exhaust stream that includes lean air, un-oxidized CO and residual H₂. An internal or external combustion engine directly or indirectly creates power in response to the pressurized fuel cell hot exhaust stream to increase the efficiency of the fuel cell power plant. Diesel reforming with SOFC anode exhaust recycle is described by Rodney L. Borup et al., the 2nd international conference on polymer batteries and fuel cells, Nevada, USA, 2005. The work of Borup et al. examines the diesel reforming in the context of transportation applications of SOFCs. Especially the diesel reforming operating conditions suitable for an SOFC are described, including modelling and experimental measurements examining recycling of the SOFC anode exhaust into the diesel reformer. This in turn includes understanding of the parameters that affect fuel processor performance, lifetime and durability.

A fuel reformer, such as a diesel fuel reformer, for the production of hydrogen for an SOFC uses a combination of partial oxidation and steam reforming, termed autothermal reforming (ATR), as already mentioned. In the partial oxidation of diesel, the hydrocarbon fuel is reacted with oxygen, supplied from air, to produce hydrogen and carbon monoxide. The stoichiometric formula for partial oxidation of a generic hydrocarbon is given by

C*ₙ*H*ₘ* + ((*n-x*)/2*)*O₂ *→* (*n-x*)CO + C*ₓ*H*_{y}* + ((*m-y*)/2)H₂

For an oxygen-to-carbon (O/C) ratio of 1, both x and y would be zero, and the products would be just hydrogen and carbon monoxide. In practice, a complete conversion is difficult to achieve and side reactions occur, leading to unconverted hydrocarbons (represented by C*ₓ*H*_{y}*) and possibly carbon particulates. Also, the partial oxidation may be run more fuel-rich with O/C < 1 to reduce the temperature rise and improve the efficiency. For operation at an O/C < 1, hydrocarbons including small hydrocarbons, such as methane and ethane, will be present in the reformate stream. These hydrocarbons can be converted to carbon monoxide and hydrogen by steam reforming (SR) with water addition to the diesel reforming process as given by the stoichiometric equation

C*ₙ*H*ₘ* + *n*H₂O -> *n*CO + ((*2n* + *m)*/2)H₂

The energy to drive the endothermic steam reforming reaction comes from the exothermic partial oxidation reaction. Thus, the addition of steam reforming not only improves the overall conversion to H₂ and CO, it also reduces the reaction temperatures and improves the thermal efficiency of the fuel reforming process.

A primary issue for the steam reforming reaction is the source of water. The simplest source of water consists in using the water produced in the SOFC and recycle it to the reformer, and the simplest recycle method is to recycle a portion of the SOFC anode exhaust directly to the reformer. However, diesel steam reforming requires a steam-to-carbon (S/C) ratio at the reformer inlet which is higher than that which can be obtained with anode recycle, and thus an external addition of water would be required. The diesel steam reforming also requires a steam-to-carbon (S/C) ratio at the reformer inlet which is higher than the one required in the SOFC stack system, which on the other hand will lower the Nernst potential.

It has now turned out that it is possible to increase the steam content at the inlet of a fuel steam reformer, such as a diesel steam reformer, for an SOFC system with anode recycle without any external addition of water. Increasing the steam content without having to add water externally can be done in several ways, which will be described in the following.

The present invention thus concerns a process for increasing the steam content at the inlet of a fuel steam reformer for a solid oxide fuel cell stack system without the need for external water addition, where the fuel is an SOFC-suitable fuel containing higher hydrocarbons, but not comprising light natural gas and only containing minor traces, if any, of alcohols and hydrogen, said process comprising
- subjecting the fuel feed or the anode gas to a treatment to produce additional water or recover the water produced in the SOFC system,
- optionally doing a fuel reformer recycle by recycling part of the outlet from the fuel reformer to the inlet thereof, and
- recycling the water or a water-enriched stream to the fuel reformer inlet and/or to a point upstream of the fuel reformer.

In the process according to the invention, the treatment to produce additional water or recover the water produced in the SOFC system comprises one of the following alternatives or any suitable combination of these:
(a) partly or totally combusting the anode recycle and/or a part of the diesel fuel prior to entering the diesel fuel reformer inlet;
(b) condensing water from the outlet gas leaving the system and recirculating said water to the diesel fuel reformer inlet;
(c) condensing water from the reformate prior to the SOFC stack system inlet and recirculating said water to the diesel fuel reformer inlet;
(d) separating the water-enriched gas in the anode outlet.

Using the process according to the invention makes it feasible to operate a system based on fuel steam reforming, which is more efficient than a CPO (catalytic partial oxidation) based system and also presents less problems with sulfur contamination of the SOFC stack. Furthermore, there is no need for external water after start-up of the system and also no need for water purification.

Regarding the above alternative (c), it becomes feasible to operate the reformer at a high oxygen-to-carbon (O/C) ratio and operate the SOFC stack system at a lower O/C, thereby operating the system with a less diluted fuel resulting in an increased Nernst potential.

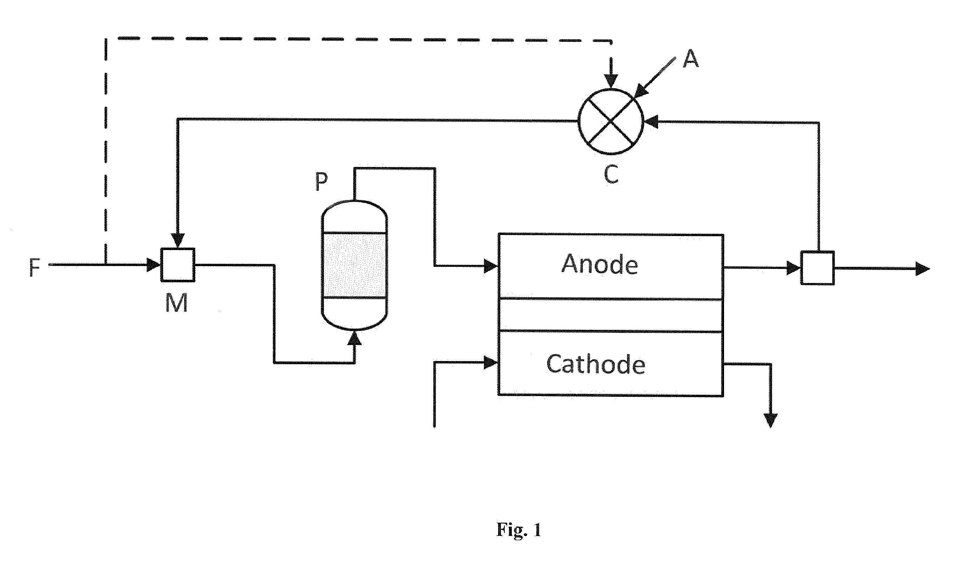

The alternative embodiments (a), (b), (c) and (d) will be described in more detail in the following with reference to the appended figures 1, 2 and 3.

The first embodiment (a), which is illustrated in Fig. 1, consists in partly or totally oxidizing the anode recycle and/or a part of the fuel in a combustion unit (C) prior to entering the fuel reformer inlet. The anode recycle is mixed with air or oxygen (A) and a part of the fuel (F) in the combustion unit (C), and the combustion product is fed to the mixer (M), where it is mixed with fresh fuel. Then the mixture is fed to the inlet of the pre-reformer (P). The anode outlet, consisting of excess fuel and water, is recycled and optionally split, and a part of the outlet may be sent out of the system to be used for other purposes. The main part of the anode outlet is combusted in the combustion unit (C) and subsequently mixed with fuel from the fuel inlet. In a variant of this embodiment it is possible that the anode off-gas is not combusted; instead it is bypassing the combustion unit (C), so that only the fuel is combusted. Fig. 1 does not directly show this possibility.

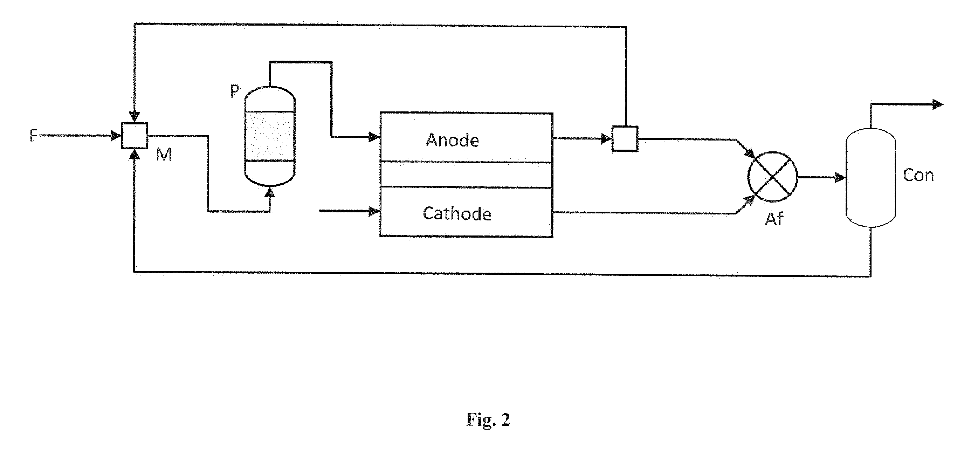

The second embodiment (b) illustrated in Fig. 2 consists in condensing water from the water-rich, fully oxidized stream consisting of both anode and cathode off-gases and recirculating said water to the fuel reformer. At least a part of the combined off-gas stream is treated in an after-burner (Af) and then the water is condensed in a condenser (Con). The condensed water is fed to a mixer (M), mixed with fuel (F) and passed to the inlet of the fuel pre-reformer (P). In this embodiment, at least part of the anode off-gas is recycled to the mixer (M).

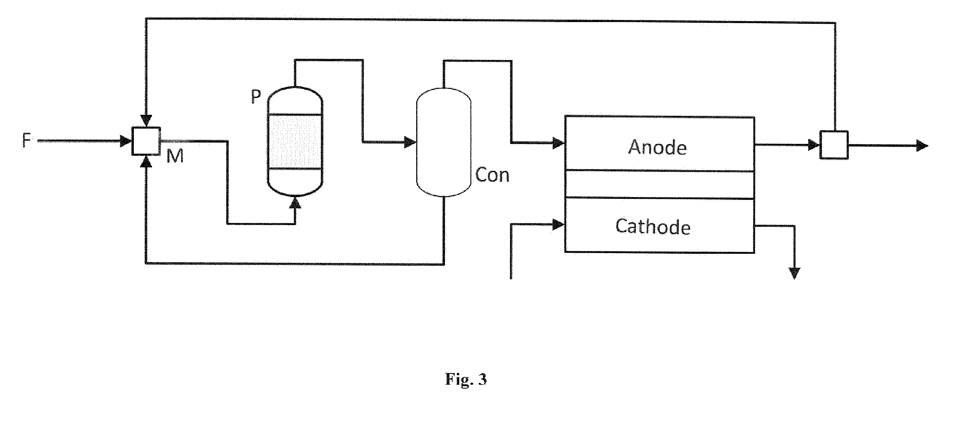

The third embodiment (c) illustrated in Fig. 3 consists in condensing some of the water in the reformate from the pre-reformer (P) prior to the SOFC stack inlet. This is done in the condenser (Con). The condensed water is separated from the syngas produced in the pre-reformer and then recirculated and mixed with fuel (F) in the mixer (M). The mixture is fed to the diesel fuel pre-reformer inlet. In this embodiment, at least part of the anode off-gas is recycled to the mixer (M).

In the embodiment (d), the treatment to produce additional water or recover the water produced in the SOFC system comprises separating the water-enriched gas in the anode outlet.

For a higher hydrocarbon, say a fuel with H/C = 2, in a system with only anode off-gas recycle and infinite recycle flow, the theoretical limit (a fuel utilization in the SOFC of 100%) of the O/C at the reformer inlet will tend to be around 3. This value is a theoretical limit that cannot be reached in a real system. Experimental investigation has shown that an O/C > 2.5 is needed for stable operation of the reformer.

To give an example of what could be achieved in a system with only anode off-gas recycle: Assume an SOFC fuelled with a hydrocarbon (H/C = 2) fuel utilization per pass of 60%, S/HHC = 4 (HHC = higher hydrocarbons) and a recycle fraction of ∼90%, which would give an O/C of 2.4 at the reformer inlet. This means that an extra source of steam is required to reach the desired O/C. Furthermore, an acceptable recycle fraction for an SOFC system should not be larger than 70-80%, as the O/C would otherwise be lowered even more.

The present invention is illustrated further in the following examples.

### Example 1

Diesel fuel is fed to a pre-reformer at a rate of 0.028 Nm³/h according to embodiment (a). The inlet stream to the reformer has the following composition (in mole percent): Ar 0.57; C₁₄H₃₀ 0.43; CH₄ 0.03; CO₂ 24.24; N₂ 47.62 and H₂O 27.11.

Anode off-gas recycle fraction: 0.8.

The reformer conditions at the inlet are as follows:

| | |
|---|---|
| O/C ratio: | 2.5 |
| S/Cₜₒₜ ratio: | 0.9 |
| S/HHC ratio: | 4.5 |

The anode off-gas stream amounts to 7.18 Nm³/h with the following composition (in mole percent): CH₄ 0.49; CO 1.47; CO₂ 25.35; H₂ 2.45; N₂ 42.85 and H₂O 26.87.

### Example 2

Diesel fuel is fed to the pre-reformer at a rate of 0.029 Nm³/h according to embodiment (b). The approximate reformer conditions at the inlet are as follows:

| | |
|---|---|
| O/C ratio: | 3.0 |
| S/Cₜₒₜ ratio: | 2.0 |
| S/HHC ratio: | 4.1 |

The anode off-gas stream amounts to 3.03 Nm³/h with the following composition (in mole percent): CH₄ 13 ppm; CO 3.41; CO₂ 24.77; H₂ 11.25 and H₂O 60.57.

### Anode off-gas recycle fraction: 0.57.

The outlet stream from the catalytic burner contains 38.04 mole % H₂O, whereas the H₂O content in the flue gas is 18.29 mole %.

### Example 3

Diesel fuel is fed to the pre-reformer at a rate of 0.021 Nm³/h according to embodiment (c). The reformer conditions at the inlet are as follows:

| | |
|---|---|
| O/C ratio: | 3.0 |
| S/Cₜₒₜ ratio: | 1.6 |
| S/HHC ratio: | 6.3 |

The O/C ratio at the SOFC stack inlet is 2.016.

### Anode off-gas recycle fraction: 0.74.

The anode off-gas stream amounts to 2.35 Nm³/h with the following composition (in mole percent): CH₄ 84 ppm; CO 7.42; CO₂ 40.46; H₂ 10.23 and H₂O 41.88.

The pre-reformer outlet stream amounts to 3.134 Nm³/h with the following composition (in mole percent): CH₄ 5.30; CO 1.55; CO₂ 29.08; H₂ 15.81 and H₂O 48.26.

## Claims

1. A process for increasing the steam content at the inlet of a fuel steam reformer for a solid oxide fuel cell (SOFC) stack system without the need for external water addition, where the fuel is an SOFC-suitable fuel containing higher hydrocarbons, but not comprising light natural gas and only containing minor traces, if any, of alcohols and hydrogen, said process comprising
- subjecting the fuel feed or the anode gas to a treatment to produce additional water and/or recover the water produced in the SOFC system,
- optionally doing a fuel reformer recycle by recycling part of the outlet from the fuel reformer to the inlet thereof, and
- recycling the water or a water-enriched stream to the fuel reformer inlet and/or to a point upstream of the fuel reformer.

2. The process according to claim 1, wherein the SOFC-suitable fuel is diesel.

3. The process according to claim 1, wherein the treatment to produce additional water or recover the water produced in the SOFC system comprises partly or totally oxidizing the anode recycle and/or a part of the fuel prior to be mixed with the fuel in a mixer upstream the reformer inlet.

4. The process according to claim 1, wherein the treatment to produce additional water or recover the water produced in the SOFC system comprises condensing water from the outlet gas leaving the system and recirculating said water to the fuel reformer inlet and/or to a point upstream of the fuel reformer.

5. The process according to claim 1, wherein the treatment to produce additional water or recover the water produced in the SOFC system comprises condensing water from the reformate prior to the SOFC stack inlet and recirculating said water to the fuel reformer inlet and/or to a point upstream of the fuel reformer.

6. The process according to claim 1, wherein the treatment to produce additional water or recover the water produced in the SOFC system comprises separating the water-enriched gas in the anode outlet.
